# EUROPEAN PATENT APPLICATION

(11) **EP 4 400 438 A2**
(43) Date of publication of application: **17.07.2024**
(21) Application number: 23214823.9
(22) Date of filing: 07.12.2023
(51) Int. Cl.: B65C 3/12, G01N 35/04

(54) **TEST TUBE SUPPLY DEVICE AND LABEL ATTACHING SYSTEM INCLUDING THE SAME**

(30) Priority: 19.12.2022 KR 20220178347
(71) Applicant: Energium Co., Ltd., Gyeonggi-do, 15115 (KR)
(72) Inventor: LEE, Kang Hee, Siheung-si 15115 (KR); BAE, Yong Tak, Siheung-si 15115 (KR); PARK, Sang Jun, Siheung-si 15115 (KR)
(74) Representative: Tiburzi, Andrea

(57) **Abstract**

A test tube supply device (100) includes a first housing (110), a second housing (120), a rotating member (130), and a driving motor (160). The first housing (110) has a first side (111) extending in a width direction of the test tube supply device, a second side (112) connected to the first side (111) and extending in a longitudinal direction of the test tube supply device, and a third side (113) connected to the second side (112) and formed parallel to the first side (111). The second housing (120) has a first support side (121) connected to the second side (112) of the first housing (110). The rotating member (130) includes a rotating shaft (133) connected to the first and third sides of the first housing, and a test tube placeable portion (131a) on which a test tube is placed. The rotating member (130) is disposed in a space formed by the first, second, and third sides of the first housing, extends from the first side to the third side, and capable of rotating around the rotating shaft (133). The driving motor (160) is connected to the rotating member (130) to rotate the rotating member.

## Description

### BACKGROUND

### Field

The disclosure relates to a test tube supply device and a label attaching system including the same.

### Description of Related Art

Test tubes containing therein samples (e.g., blood) required for various tests are used in medical institutions such as hospitals. To increase test efficiency, information about the sample contained in the test tube may be indicated on a surface of the test tube. For example, a blood collection date, a blood collection time, and personal information of a test subject may be indicated on the surface of the test tube using a barcode or the like.

An automated label attaching system for test tubes may be used to attach a label printed with text information or electronic information, such as a barcode, to indicate sample information on the surface of the test tube.

The label attaching system may include a test tube supply device for inserting test tubes into a labeling device. In addition, the label attaching system may further include the labeling device for attaching a label to the test tube supplied by the test tube supply device, and a label printing device for printing information on the label to be attached to the test tube. The test tube supply device in which a plurality of test tubes are loaded can discharge the test tubes through a discharge opening to supply them to the labeling device.

The above information is presented as background information only to assist with an understanding of the disclosure. No determination or assertion is made as to whether any of the above might be applicable as prior art with regard to the disclosure

### .SUMMARY

The test tubes inserted into the test tube supply device may be discharged one by one to the outside of the test tube supply device. In the process of discharging the test tubes out of the test tube supply device, the test tubes may get caught in a discharge opening, causing a discharge delay.

The technical subjects pursued in the disclosure may not be limited to the above mentioned technical subjects, and other technical subjects which are not mentioned may be clearly understood, through the following descriptions, by those skilled in the art to which the disclosure pertains. Additional aspects will be partially described in the following description, will be partially apparent from the description, or will be understood by implementing the presented embodiments.

According to an embodiment of the disclosure, a test tube supply device includes a first housing having a first side extending in a width direction of the test tube supply device, a second side connected to the first side and extending in a longitudinal direction of the test tube supply device, and a third side connected to the second side and formed parallel to the first side; a second housing having a first support side connected to the second side of the first housing; a rotating member including a rotating shaft connected to the first and third sides of the first housing, and a test tube placeable portion on which a test tube is placed, the rotating member disposed in a space formed by the first, second, and third sides of the first housing, extending from the first side to the third side, and capable of rotating around the rotating shaft; and a driving motor connected to the rotating member to rotate the rotating member. When the test tube is placed in the test tube placeable portion, the rotating member rotates in one direction to discharge the test tube placed in the test tube placeable portion to outside of the test tube supply device, and when rotation of the rotating member is stopped during rotation in one direction, the rotating member rotates in another direction opposite to the one direction.

According to an embodiment of the disclosure, a label attaching system may include the above test tube supply device, a label printing device disposed in one direction of the test tube supply device and printing information on a label to be attached to a test tube, and a labeling device provided on one side of the label printing device and attaching the label supplied from the label printing device to the test tube supplied from the test tube supply device.

The test tube supply device according to an embodiment of the disclosure can detect a jamming phenomenon of test tubes therein.

The test tube supply device according to an embodiment of the disclosure can prevent a delay in discharging test tubes by adjusting the rotation of the rotating member when the jamming phenomenon of test tubes is detected.

The test tube supply device according to an embodiment of the disclosure can provide a structure in which a plurality of test tubes can be loaded.

The test tube supply device according to an embodiment of the disclosure can supply various types of test tubes to the outside without a discharge delay.

Other aspects, advantages, and salient features of the disclosure will become apparent to those skilled in the art from the following detailed description disclosing various embodiments of the disclosure with reference to the accompanying drawings.

### BRIEF DESCRIPTION OF THE DRAWINGS

In connection with the description of the drawings, the same or similar components may be denoted by the same or similar reference numerals.
FIGS. 1A and 1B are perspective views showing a test tube supply device according to an embodiment of the disclosure.
FIG. 2 is a plan view showing a test tube supply device according to an embodiment of the disclosure.
FIG. 3 is a front view showing a test tube supply device according to an embodiment of the disclosure.
FIG. 4 is a diagram showing a state in which a plurality of test tubes are arranged in a test tube supply device according to an embodiment of the disclosure.
FIGS. 5A, 5A, and 5C are diagrams showing the rotation of a rotating member according to an embodiment of the disclosure.
FIGS. 6A, 6B, and 6C are diagrams showing a test tube supply device including a test tube insertion part and a base part according to an embodiment of the disclosure.
FIG. 7 is a perspective view showing a label attaching system including a test tube supply device according to an embodiment of the disclosure.

### DETAILED DESCRIPTION

The following description with reference to the accompanying drawings is provided to assist in comprehensive understanding of an embodiment of the disclosure as defined by the appended claims thereof. The description includes various specific details to assist in the understanding, but the details are to be regarded merely as examples. Accordingly, those skilled in the art will recognize that various changes and modifications may be made to an embodiment set forth herein without departing from the scope of the disclosure. In addition, descriptions of well-known functions and configurations may be omitted for the sake of clarity and conciseness.

The terms and words used in the following description and the appended claims are not limited to the bibliographical meanings thereof, but are merely used by the inventors to enable clear and consistent understanding of the disclosure. Accordingly, it will be apparent to those skilled in the art that the following description of various embodiments of the disclosure is not intended to limit the disclosure as defined by the appended claims thereof, but is provided merely for the purpose of illustration.

It is to be understood that the expressions in singular forms include plural referents unless the context clearly dictates otherwise. Therefore, for example, reference to "a component surface" includes reference to one or more such surfaces

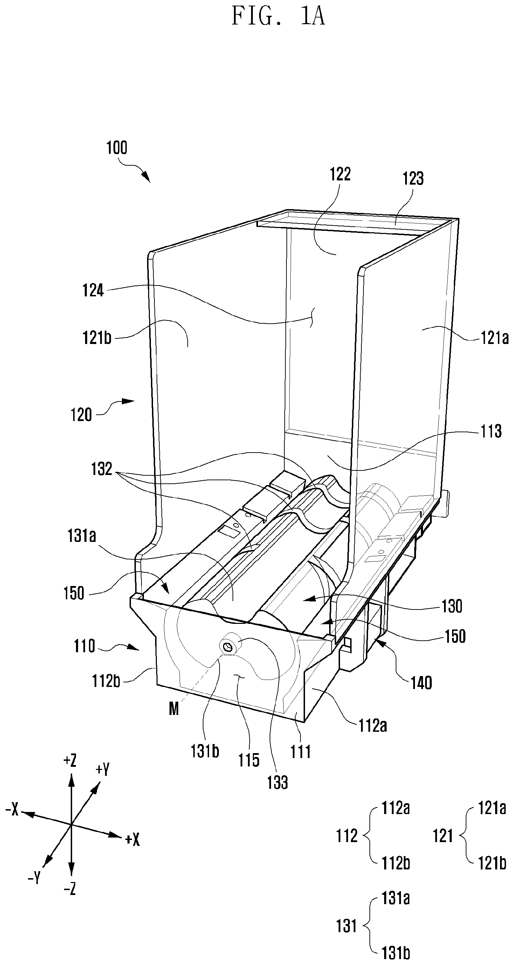

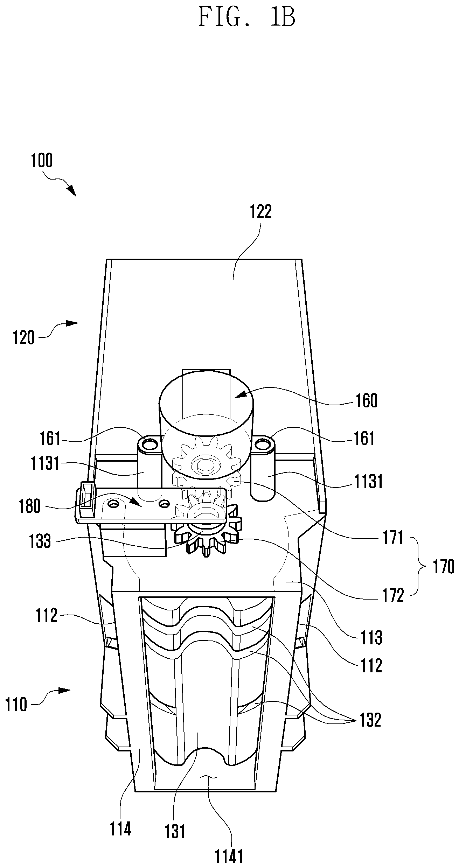

FIGS. 1A and 1B are perspective views showing a test tube supply device 100 according to an embodiment of the disclosure.

In describing the test tube supply device 100 according to an embodiment of the disclosure, the width direction of the test tube supply device 100 may refer to the x-axis direction, and the longitudinal direction of the test tube supply device 100 may refer to the y-axis direction. Also, the height direction of the test tube supply device 100 may refer to the z-axis direction.

With reference to FIGS. 1A and 1B, the test tube supply device 100 according to an embodiment of the disclosure may include a first housing 110, a second housing 120, a rotating member 130, a test tube detection sensor 140, a supporting part 150, a driving motor 160, a gear 170, and/or a gear fixing member 180.

FIG. 1A is a perspective view showing a first side 111 and a second side 112 of the first housing 110 according to an embodiment of the disclosure. FIG. 1B is a perspective view showing a third side 113 and a fourth side 114 of the first housing 110 according to an embodiment of the disclosure.

In an embodiment, the first housing 110 may provide a space in which the rotating member 130 is disposed. For example, the first housing 110 may be formed to surround the rotating member 130.

In an embodiment, the first housing 110 may have the first side 111, the second side 112, the third side 113, the fourth side 114, and/or an installation space 115.

In an embodiment, the first side 111 of the first housing 110 may extend along the width direction (e.g., x-axis direction) and the height direction (e.g., z-axis direction) of the test tube supply device 100. The third side 113 is formed substantially parallel to the first side 111 and may also extend in the width direction (e.g., x-axis direction) and the height direction (e.g., z-axis direction) of the test tube supply device 100.

In an embodiment, the second side 112 of the first housing 110 may be formed to extend between the first side 111 and the third side 113. For example, the second side 112 may extend from the first side 111 toward the third side 113 in the longitudinal direction (e.g., y-axis direction) of the test tube supply device 100.

In an embodiment, the first housing 110 may have two second sides 112 on both ends of the first and third sides 111 and 113. For example, a second-first side 112a may be disposed on one end of the first and third sides 111 and 113 (e.g., the end of the first and third sides 111 and 113 in the positive x-axis direction), and a second-second side 112b may be disposed on the other end of the first and third sides 111 and 113 (e.g., the end of the first and third sides 111 and 113 in the negative x-axis direction).

In an embodiment, the fourth side 114 of the first housing 110 may be connected to the first side 111, the second side 112, and the third side 113 of the first housing 110. The fourth side 114 may be formed in a direction opposite to the second housing 120 with respect to the rotating member 130.

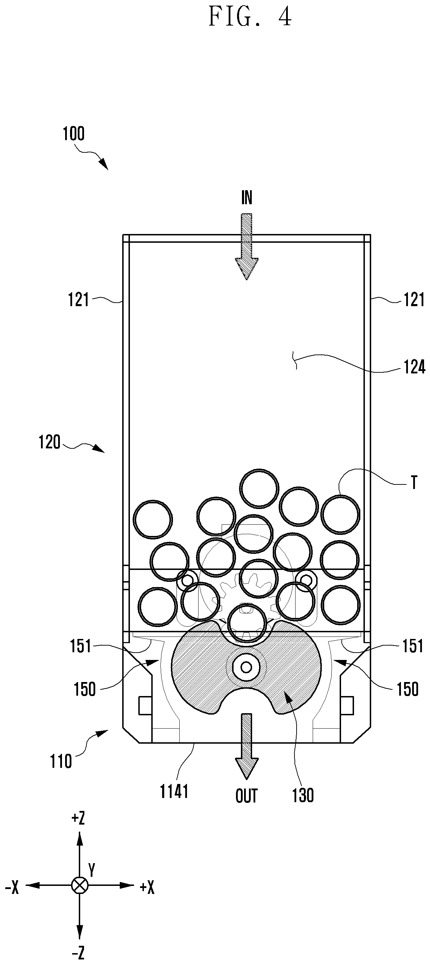

With reference to FIG. 1B, the fourth side 114 of the first housing 110 may have a discharge opening 1141 through which a test tube T (see FIG. 4) may be discharged to the outside of the test tube supply device 100.

In an embodiment, the first side 111, the second side 112, the third side 113, and the fourth side 114 of the first housing 110 may form the installation space 115 in which the rotating member 130 is disposed. The installation space 115 may refer to a space surrounded by the first side 111, the second side 112, the third side 113, and the fourth side 114 of the first housing 110.

In an embodiment, one direction of the first housing 110 may refer to the positive z-axis direction with respect to the first housing 110, and the other direction of the first housing 110 may refer to the negative z-axis direction with respect to the first housing 110.

In an embodiment, the second housing 120 may be disposed in one direction (e.g., positive z-axis direction) of the first housing 110.

In an embodiment, the second housing 120 may have a first support side 121, a second support side 122, a cover 123, and/or an accommodation space 124.

In an embodiment, the first support side 121 of the second housing 120 may be connected to the second side 112 of the first housing 110. For example, the first support side 121 may be formed to extend from the second side 112 of the first housing 110 in the height direction (e.g., z-axis direction) of the test tube supply device 100.

In an embodiment, the second housing 120 may have two first support sides 121. For example, a first-first support side 121a may be connected to the end of the second-first side 112a, and a first-second support side 121b may be connected to the end of the second-second side 112b.

In an embodiment, the second support side 122 of the second housing 120 may be connected to the third side 113 of the first housing 110. For example, the second support side 122 may be formed to extend from the third side 113 of the first housing 110 in the height direction (e.g., z-axis direction) of the test tube supply device 100.

In an embodiment, the first and second support sides 121 and 122 of the second housing 120 may form the accommodation space 124 in which test tubes T (see FIG. 4) can be placed. The accommodation space 124 may refer to a space surrounded by the first support side 121 and the second support side 122.

In an embodiment, the cover 123 of the second housing 120 may be arranged to cover at least a portion of the end of the test tube supply device 100. For example, the cover 123 may be disposed at the end of the test tube supply device 100 in the positive z-axis direction to cover a portion of the accommodation space 124. The cover 123 may be connected to the first and second support sides 121 and 122 of the second housing 120.

In an embodiment, the rotating member 130 may be disposed in the installation space 115 of the first housing 110. For example, the rotating member 130 may be disposed in the installation space 115 and surrounded by the first side 111, the second side 112, the third side 113, and the fourth side 114 of the first housing 110.

In an embodiment, the rotating member 130 may serve to discharge the test tubes T (see FIG. 4) to the outside of the test tube supply device 100.

In an embodiment, the rotating member 130 may extend in the longitudinal direction (e.g., y-axis direction) of the test tube supply device 100.

In an embodiment, the rotating member 130 may be rotated about the rotation center M shown in FIG. 1A. The rotating member 130 may be rotated clockwise or counterclockwise based on the rotation center M.

As shown in FIGS. 1A and 1B, the rotating member 130 may include a test tube placeable portion 131 and/or a groove 132.

In an embodiment, the test tube placeable portion 131 may be an area in which a portion of the rotating member 130 is concavely formed toward the rotation center M. The test tube T (see FIG. 4) inserted into the test tube supply device 100 may be placed in the test tube placeable portion 131 of the rotating member 130. To stably keep the test tube T, at least a portion of the test tube placeable portion 131 may have a concave shape toward the rotation center M.

In an embodiment, the test tube placeable portion 131 may include a first test tube placeable portion 131a and/or a second test tube placeable portion 131b. The first test tube placeable portion 131a may be disposed in a position symmetrical to the second test tube placeable portion 131b with respect to the rotation center M and a rotating shaft 133.

In an embodiment, the rotating member 130 may have grooves 132. The groove 132 may refer to a space in which a portion of the rotating member 130 is depressed along a direction (e.g., the x-axis direction) perpendicular to an extension direction (e.g., the y-axis direction) of the rotating member 130. A test tube detection sensor 140 or a partition member (not shown) may be placed in the groove 132 of the rotating member 130.

In an embodiment, the supporting part 150 may be disposed on the second side 112 of the first housing 110. For example, the supporting part 150 may be disposed in a direction from the second side 112 of the first housing 110 toward the rotating member 130. Two supporting parts 150 may be respectively disposed on the second sides 112 of the first housing 110.

The supporting part 150 may be an area that supports the test tube T (see FIG. 4) inserted into the test tube supply device 100 in the height direction (e.g., z-axis direction) of the test tube supply device 100.

In an embodiment, the supporting part 150 may be formed integrally with the second side 112 of the first housing 110. For example, the two supporting parts 150 may be formed integrally with the second-first side 112a and the second-second side 112b, respectively, in the form of extending from the second-first side 112a and the second-second side 112b toward the rotating member 130.

With reference to FIG. 1B, the driving motor 160 may be disposed in a direction opposite to the rotating member 130 with respect to the third side 113 of the first housing 110.

In an embodiment, the third side 113 of the first housing 110 may have a motor coupling portion 1131 that protrudes and extends in a direction toward the driving motor 160.

Although FIG. 1B shows that two motor coupling portions 1131 are formed, this is an example and the number of motor coupling portions 1131 may not be limited to this.

In an embodiment, the driving motor 160 may have coupling parts 161 on both lateral sides thereof. The driving motor 160 may be coupled to the motor coupling portions 1131 of the third side 113 of the first housing 110 through the coupling parts 161.

In an embodiment, the driving motor 160 may generate a rotational force. The rotational force generated by the driving motor 160 may be transmitted to the rotating member 130. The rotating member 130 may be rotated by receiving the rotational force generated by the driving motor 160.

In an embodiment, the gear 170 may include a first gear 171 and/or a second gear 172. The first gear 171 and the second gear 172 may be disposed on the third side 113 of the first housing 110.

In an embodiment, the first gear 171 may be connected to the driving motor 160. For example, the first gear 171 may receive the rotational force from the driving motor 160.

In an embodiment, the second gear 172 may be arranged to engage with the first gear 171 at least in part. For example, the second gear 172 may be disposed in the negative z-axis direction with respect to the first gear 171 and engage with the first gear 171 at least in part. The second gear 172 may receive the rotational force from the first gear 171.

In an embodiment, the second gear 172 may be connected to the rotating shaft 133 of the rotating member 130. For example, the rotating shaft 133 may be disposed at the center of the second gear 172 and the rotational force of the second gear 172 may be transferred to the rotating shaft 133 and the rotating member 130 including the rotating shaft 133.

Although FIG. 1B shows that the first and second gears 171 and 172 have the same size and the same shape, this is exemplary only, and the sizes and shapes of the first and second gears 171 and 172 may not be limited to this. For example, the first gear 171 may be formed larger or smaller than the second gear 172.

In an embodiment, the gear fixing member 180 may serve to fix the position of the gear 170. For example, the gear fixing member 180 may fix the second gear 172 so that the second gear 172 does not separate from the third side 113 of the first housing 110.

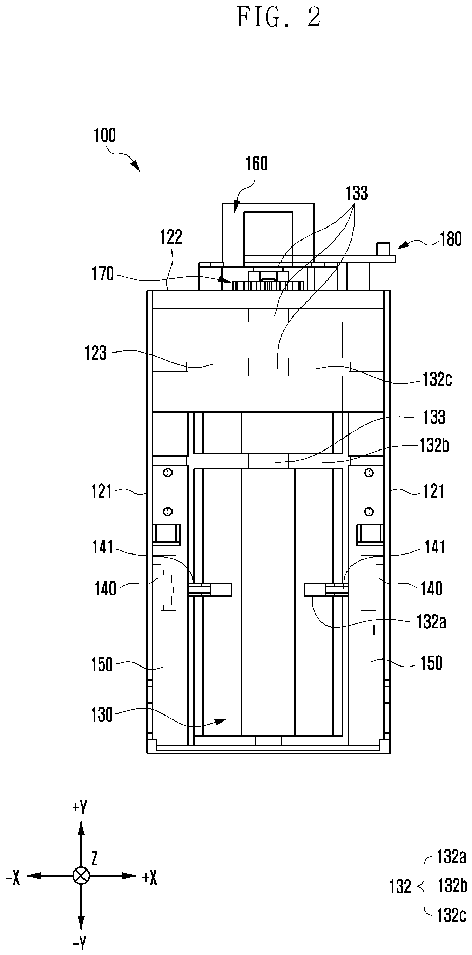

FIG. 2 is a plan view showing a test tube supply device 100 according to an embodiment of the disclosure.

FIG. 2 shows the test tube supply device 100 viewed from a direction substantially parallel to the negative z-axis direction.

In an embodiment, the rotating member 130 may have the grooves 132. The groove 132 may refer to a space in which a portion of the rotating member 130 is depressed along a direction (e.g., the x-axis direction) perpendicular to an extension direction (e.g., the y-axis direction) of the rotating member 130.

In an embodiment, the grooves 132 may include a first groove 132a, a second groove 132b, and/or a third groove 132c. The first groove 132a, the second groove 132b, and the third groove 132c may be arranged at intervals in the longitudinal direction (e.g., y-axis direction) of the test tube supply device 100.

In an embodiment, the test tube detection sensors 140 may be disposed on both sides of the rotating member 130. For example, the test tube detection sensor 140 may be arranged in the negative x-axis direction or in the positive x-axis direction with respect to the rotating member 130.

In an embodiment, the test tube detection sensor 140 may have a detection area 141 in which a portion of the test tube detection sensor 140 extends in a direction toward the rotating member 130.

In an embodiment, at least a portion of the test tube detection sensor 140 may be disposed in the first groove 132a. For example, the detection area 141 of the test tube detection sensor 140 may be placed in the first groove 132a. When the rotating member 130 is rotated, the detection area 141 of the test tube detection sensor 140 may recognize that the test tube T (see FIG. 4) placed on the rotating member 130 is being moved to be discharged to the outside of the test tube supply device 100.

In an embodiment, a partition member (not shown) may be disposed in the second groove 132b and/or the third groove 132c. The partition member (not shown) may be a member extending in the width direction (e.g., x-axis direction) and the height direction (e.g., z-axis direction) of the test tube supply device 100.

In an embodiment, the position where the partition member (not shown) is disposed may vary depending on the length of the test tube T (see FIG. 4) inserted into the test tube supply device 100. For example, when a relatively short test tube T (see FIG. 4) is inserted into the test tube supply device 100, the partition member (not shown) may be placed in the second groove 132b. In this case, the test tube T (see FIG. 4) may not be placed in a region from the second groove 132b to the second support side 122 of the second housing 120 among regions of the rotating member 130.

In an embodiment, if the partition member (not shown) is not disposed in the second groove 132b and/or the third groove 132c, and if the length of the test tube T (see FIG. 4) inserted into the test tube supply device 100 is shorter than the length of the rotating member 130, the test tubes T having a shorter length may be in various regions of the test tube supply device 100 and the rotating member 130. So, the test tubes T may be arranged in a relatively unaligned state. However, if the partition member (not shown) is disposed in the second groove 132b and/or the third groove 132c, the test tubes T inserted into the test tube supply device 100 may be concentrated and arranged in some regions of the test tube supply device 100 and the rotating member 130. So, the test tubes T may be arranged in a relatively aligned state.

In an embodiment, the supporting parts 150 may be disposed at a distance from the rotating member 130 near both sides of the rotating member 130. For example, each of the two supporting parts 150 may be positioned to be spaced apart from the rotating member 130 in the positive x-axis direction or the negative x-axis direction.

In an embodiment, when a plurality of test tubes T (see FIG. 4) are inserted into the test tube supply device 100, some test tubes T may be disposed on the rotating member 130, and the others may be disposed on the supporting parts 150.

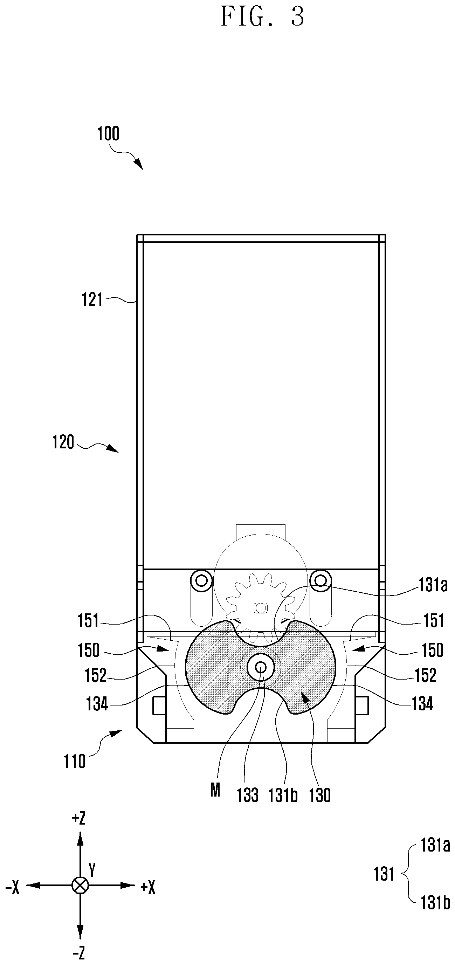

FIG. 3 is a front view showing a test tube supply device 100 according to an embodiment of the disclosure.

FIG. 3 shows the test tube supply device 100 viewed from a direction substantially parallel to the y-axis direction.

In an embodiment, the first and second housings 110 and 120 of the test tube supply device 100 may have at least a portion of a transparent material. FIG. 3 may be a diagram showing the first and second housings 110 and 120 having at least a portion of a transparent material.

In an embodiment, the rotating member 130 may have the rotating shaft 133. The rotating shaft 133 may extend in the longitudinal direction (e.g., y-axis direction) of the test tube supply device 100 along the rotation center M.

In an embodiment, the test tube placeable portion 131 of the rotating member 130 may be formed in a concave shape toward the rotating shaft 133.

With reference to FIG. 3, the test tube placeable portion 131 may include the first test tube placeable portion 131a and/or the second test tube placeable portion 131b. The first test tube placeable portion 131a may be disposed in a position symmetrical to the second test tube placeable portion 131b with respect to the rotating shaft 133 and the rotation center M.

In an embodiment, the rotating member 130 may have a shape that is symmetrical with respect to the rotating shaft 133. For example, the rotating member 130 may include a curved area 134 having a shape symmetrical about the rotating shaft 133. The curved area 134 may be formed to be symmetrically on both sides of the rotating shaft 133.

In an embodiment, the curved area 134 may refer to an area where a portion of the rotating member 130 extends with a curved surface. For example, as shown in FIG. 3, the rotating member 130 may be formed with a curved surface having a certain radius of curvature in the curved area 134. In the curved area 134, at least a portion of the rotating member 130 may be formed to be convex in a direction away from the rotating shaft 133 and the test tube placeable portion 131.

In an embodiment, the rotating member 130 having the curved area 134 may be easily rotated without contacting other parts of the test tube supply device 100.

In an embodiment, since the rotating member 130 is formed to be convex in the curved area 134 in a direction away from the test tube placeable portion 131, it may induce the remaining test tubes T, except for the test tubes T (see FIG. 4) placed in the test tube placeable portion 131, to be moved and arranged in a direction away from the test tube placeable portion 131.

In an embodiment, one direction of the rotating member 130 may indicate the positive x-axis direction, and the other direction of the rotating member 130 may indicate the negative x-axis direction.

In an embodiment, the supporting parts 150 may be arranged at a distance from the rotating member 130 in one direction and the other direction of the rotating member 130, respectively. The supporting parts 150 may serve to support the test tubes T (see FIG. 4) inserted into the test tube supply device 100.

In an embodiment, the supporting part 150 may have a first surface 151 and/or a second surface 152.

In an embodiment, the first surface 151 of the supporting part 150 is a surface facing the height direction (e.g., positive z-axis direction) of the test tube supply device 100 and may be formed to be inclined at a certain angle toward the rotation center M. When the first surface 151 of the supporting part 150 is formed to be inclined, the test tube T (see FIG. 4) placed on the first surface 151 of the supporting part 150 can be easily moved toward the position of the rotating member 130.

In an embodiment, the second surface 152 of the supporting part 150 may have a curved shape. The second surface 152 of the supporting part 150 may be formed in a curved shape corresponding to the curved area 134 of the rotating member 130. For example, the second surface 152 of the supporting part 150 may have a concave shape corresponding to the convex shape of the curved area 134 of the rotating member 130. The second surface 152 of the supporting part 150 may be positioned at a distance from the curved area 134 of the rotating member 130. Since the second surface 152 of the supporting part 150 has a concave shape, the rotating member 130 can rotate without contacting the supporting part 150.

FIG. 4 is a diagram showing a state in which a plurality of test tubes T are arranged in a test tube supply device 100 according to an embodiment of the disclosure.

In an embodiment, test tubes T may be arranged in the test tube supply device 100. For example, the plurality of test tubes T may be accommodated in the accommodation space 124 formed in the second housing 120.

In an embodiment, the test tube T may contain a sample therein. For example, the sample contained in the test tube T may be a patient's blood to be tested, an animal specimen, a plant specimen, or a chemical.

In an embodiment, the test tube T may be formed in a tubular shape. For example, the test tube T shown in FIG. 4 may be formed as a tube having a circular cross-section and extending in the y-axis direction.

In an embodiment, the plurality of test tubes T may be supported in the width direction (e.g., x-axis direction) of the test tube supply device 100 by the first support side 121 of the second housing 120. For example, the first support side 121 may support the plurality of test tubes T in the width direction (e.g., x-axis direction) of the test tube supply device 100 to prevent the plurality of test tubes T from falling out of the test tube supply device 100.

In an embodiment, the plurality of test tubes T may be supported in the height direction (e.g., z-axis direction) of the test tube supply device 100 by the rotating member 130 or the supporting part 150. For example, the rotating member 130 or the first side 151 of the supporting part 150 may support the plurality of test tubes T in the z-axis direction.

In an embodiment, the test tube T may be inserted (IN) into the test tube supply device 100 and arranged in the accommodation space 124. The test tube T may be inserted from the outside of the test tube supply device 100 in a direction (e.g., negative z-axis direction) toward the accommodation space 124 of the test tube supply device 100.

In an embodiment, the test tube T may be discharged (OUT) to the outside of the test tube supply device 100 through the discharge opening 1141. The test tube T may be discharged in a direction (e.g., negative z-axis direction) away from the test tube supply device 100 through the discharge opening 1141.

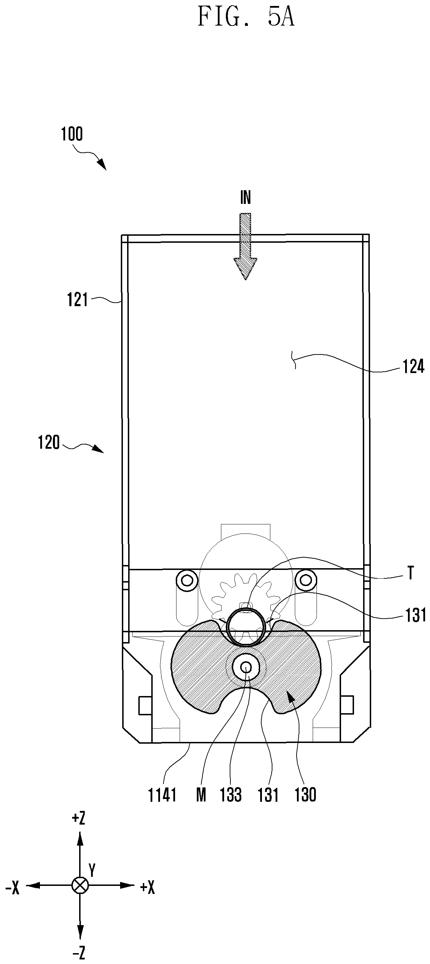

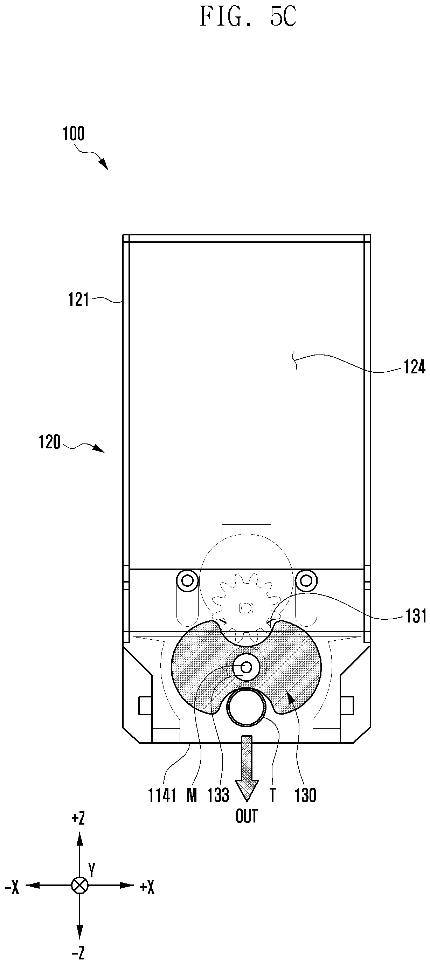

FIGS. 5A, 5A, and 5C are diagrams showing the rotation of a rotating member 130 according to an embodiment of the disclosure.

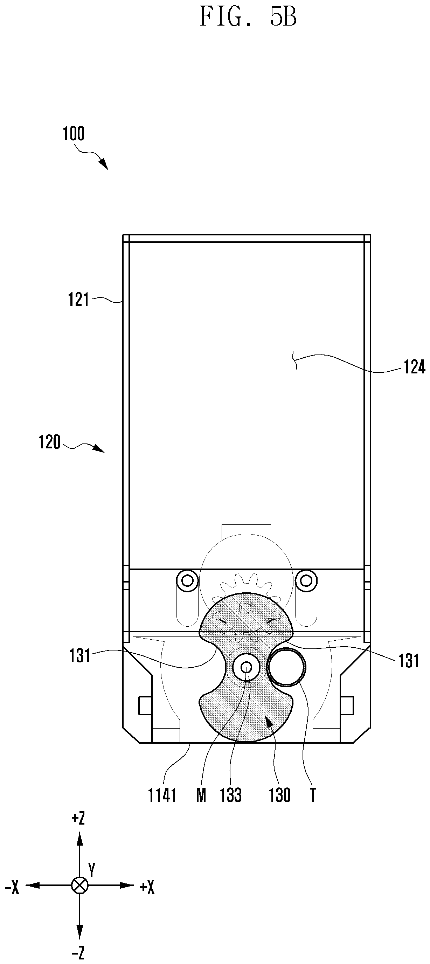

FIG. 5A is a diagram showing a state in which the test tube T is placed on the test tube placeable portion 131 of the rotating member 130. FIG. 5B is a diagram showing a state after the rotating member 130 shown in FIG. 5A is rotated by 90 degrees about the rotation center M. FIG. 5C is a diagram showing a state after the rotating member 130 shown in FIG. 5A is rotated by 180 degrees.

With reference to FIGS. 5A, 5B, and 5C, the rotating member 130 is rotatable based on the rotation center M. The rotating member 130 can be rotated by receiving rotational force from the driving motor 160 (see FIG. 1B).

As shown in FIGS. 5A, 5B, and 5C, the test tube T may be placed on the test tube placeable portion 131 of the rotating member 130 and then moved in accordance with the rotation of the rotating member 130. For example, as shown in FIG. 5B, when the rotating member 130 is rotated by 90 degrees about the rotation center M from the state of FIG. 5A, the test tube T is also disposed at a position rotated by 90 degrees about the rotation center M. As shown in FIG. 5C, when the rotating member 130 is rotated by 180 degrees about the rotation center M from the state of FIG. 5A, the test tube T is also disposed at a position rotated by 180 degrees about the rotation center M.

Although FIGS. 5A, 5B, and 5C show that the rotating member 130 is rotated clockwise about the rotation center M, this is exemplary only and the rotation direction of the rotating member 130 is not limited to this. For example, the rotating member 130 may be rotated counterclockwise based on the rotation center M.

In the state of FIG. 5A, the test tube T can be supported by the rotating member 130. That is, in the state of FIG. 5A, the test tube T is placed on the test tube placeable portion 131 of the rotating member 130 and supported in the height direction (e.g., z-axis direction) of the test tube supply device 100 so as not to leave the test tube supply device 100. In the state of FIG. 5C, the test tube T can be discharged to the outside of the test tube supply device 100. That is, in the state of FIG. 5C, the test tube T is not supported by the rotating member 130, so it can be discharged (OUT) to the outside of the test tube supply device 100 through the discharge opening 1141.

In an embodiment, the test tube placeable portion 131 may have a shape that partially surrounds the outer surface of the test tube T. For example, when the cross-section (e.g., cross-section perpendicular to the y-axis direction) of the test tube T is circular, the test tube placeable portion 131 may have a concave cross-section (e.g., cross-section perpendicular to the y-axis direction) partially surrounding the outer surface of the test tube T. When the test tube placeable portion 131 has a shape partially surrounding the outer surface of the test tube T, the test tube T placed on the test tube placeable portion 131 can be prevented from being separated from the test tube placeable portion 131.

In an embodiment, a discharge preparation state of the test tube supply device 100 may refer to the state shown in FIG. 5A. For example, the discharge preparation state of the test tube supply device 100 may indicate a state in which the test tube T inserted (IN) into the test tube supply device 100 is placed in the test tube placeable portion 131 of the rotating member 130 and located in the positive z-axis direction with respect to the rotation center M.

In an embodiment, a discharge state of the test tube supply device 100 may refer to the state shown in FIG. 5C. For example, the discharge state of the test tube supply device 100 may indicated a state in which the test tube T inserted into the test tube supply device 100 is located in the negative z-axis direction with respect to the rotation center M and being discharged to the outside of the test tube supply device 100.

In an embodiment, when the rotating member 130 and the test tube T placed on the rotating member 130 are rotated about the rotation center M, the test tube detection sensor 140 (see FIG. 1A) can detect the movement of the rotating member 130 and/or the test tube T. The test tube detection sensor 140 (see FIG. 1A) can detect that the test tube supply device 100 is changing from the discharge preparation state in FIG. 5A to the discharge state in FIG. 5C.

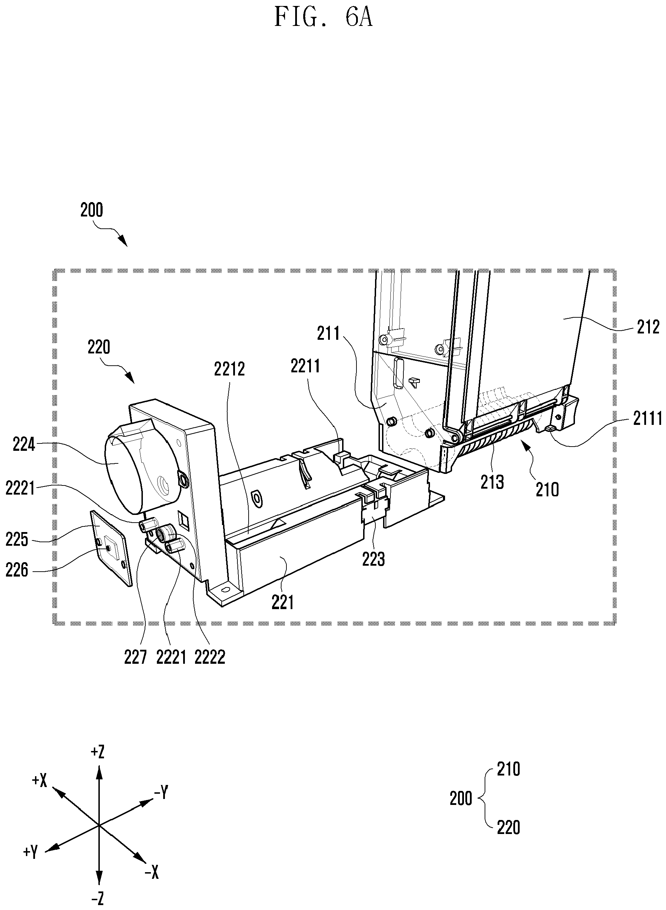

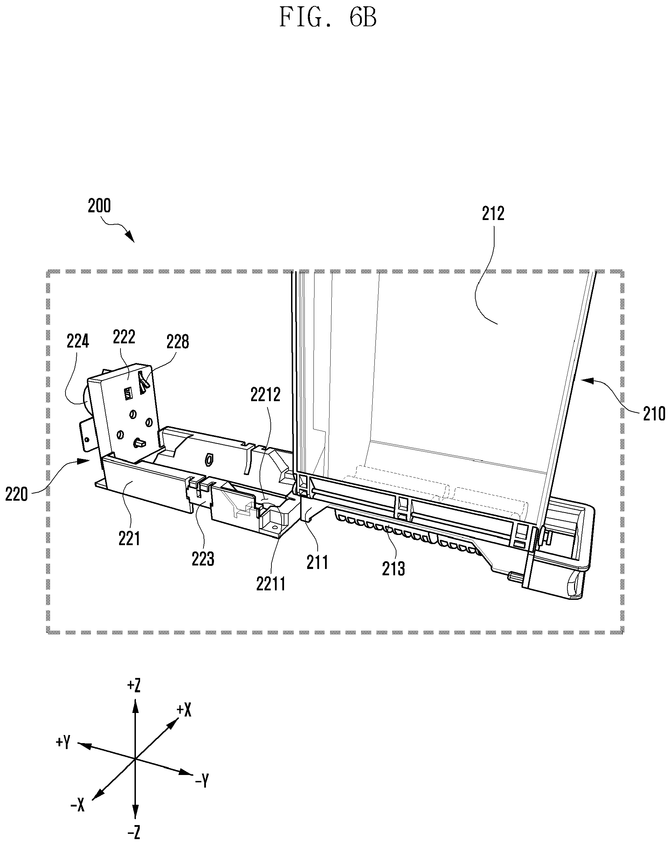

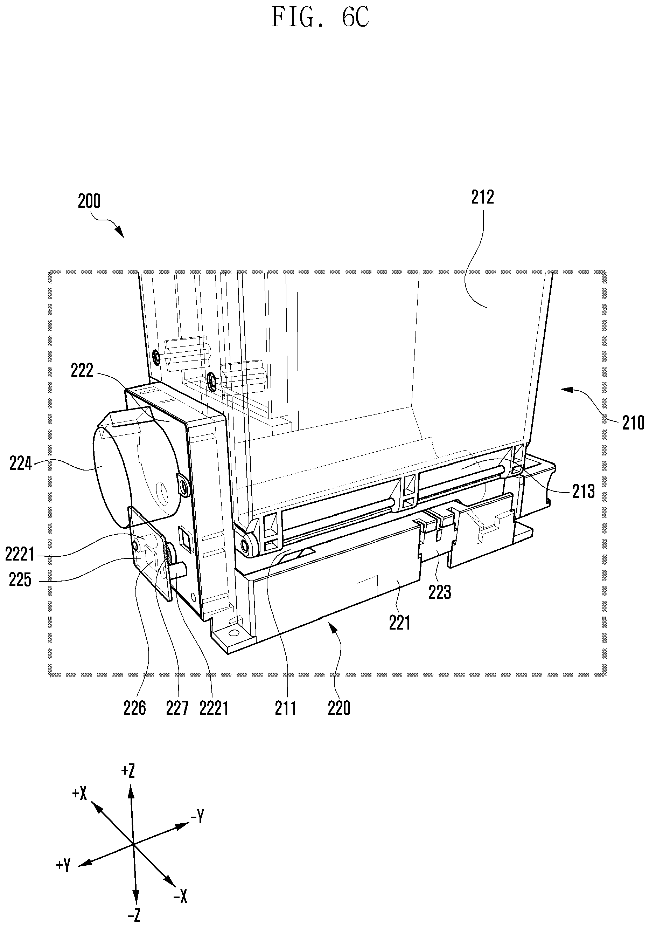

FIGS. 6A, 6B, and 6C are diagrams showing a test tube supply device 200 including a test tube insertion part 210 and a base part 220 according to an embodiment of the disclosure.

FIGS. 6A and 6B show a state in which the test tube insertion part 210 and the base part 220 are separated from each other. FIG. 6C shows a state in which the test tube insertion part 210 and the base part 220 are combined with each other.

In describing the test tube supply device 200 according to this embodiment, the width direction of the test tube supply device 200 may refer to the x-axis direction, and the longitudinal direction of the test tube supply device 200 may refer to the y-axis direction. In addition, the height direction of the test tube supply device 200 may refer to the z-axis direction.

With reference to FIGS. 6A, 6B, and 6C, the test tube supply device 200 may include the test tube insertion part 210 and/or the base part 220.

In an embodiment, the test tube insertion part 210 shown in FIGS. 6A, 6B, and 6C may include at least a portion of the test tube supply device 100 shown in FIG. 1.

In an embodiment, the functions of respective components of the test tube insertion part 210 shown in FIG. 6A may be substantially the same as the functions of corresponding components of the test tube supply device 100 shown in FIG. 1. For example, a first housing 211, a second housing 212, and a rotating member 213 of the test tube insertion part 210 shown in FIG. 6A may have substantially the same functions as those of the first housing 110, the second housing 120, and the rotating member 130 of the test tube supply device 100 shown in FIG. 1.

In describing the test tube insertion part 210 shown in FIG. 6A, detailed descriptions of components that are substantially the same as those of the test tube supply device 100 shown in FIG. 1 may be omitted.

With reference to FIGS. 6A, 6B, and 6C, the base part 220 may include a first base region 221, a second base region 222, a test tube detection sensor 223, a driving motor 224, a cover 225, a magnetic encoder 226, a magnet 227, and/or a coupling detection sensor 228.

In an embodiment, the test tube insertion part 210 may be separated from or combined with the base part 220. For example, the test tube insertion part 210 may be detachably coupled to the base part 220. Even after the test tube insertion part 210 is coupled to the base part 220, it may be separated from the base part 220 again.

In an embodiment, the first base region 221 may be formed to extend in the longitudinal direction (e.g., y-axis direction) of the test tube supply device 200. For example, the first base region 221 may be formed to extend in substantially the same direction as the extension direction of the rotating member 213 of the test tube insertion part 210. The first base region 221 may form a space in which the first housing 211 and the rotating member 213 of the test tube insertion part 210 can be accommodated.

With reference to FIGS. 6A and 6B, the first base region 221 may have a coupling portion 2211 for coupling the test tube insertion part 210, and/or a discharge opening 2212 for discharging the test tube T.

In an embodiment, the coupling portion 2211 may have a hook shape capable of being coupled to at least a portion of the first housing 211 of the test tube insertion part 210.

In an embodiment, two coupling portions 2211 may be formed in the first base region 221. For example, the coupling portions 2211 may be formed in one direction (e.g., positive x-axis direction) and the other direction with respect to the discharge opening 2212 of the first base region 221, respectively.

In an embodiment, the first housing 211 of the test tube insertion part 210 may have a fixing portion 2111 coupled to the coupling portion 2211 of the first base region 221.

In an embodiment, two fixing portions 2111 may be formed in the first housing 211. For example, the fixing portions 2111 may be formed in one direction (e.g., positive x-axis direction) and the other direction with respect to the rotating member 213, respectively.

In an embodiment, when the test tube insertion part 210 is placed in the first base region 221, the fixing portion 2111 of the first housing 211 can be engaged with and fixed to the coupling portion 2211 of the first base region 221 at least in part.

In an embodiment, the second base region 222 of the base part 220 may be formed to extend in the height direction (e.g., z-axis direction) of the test tube supply device 200.

In an embodiment, when the test tube insertion part 210 is placed in the first base region 221, the second base region 222 may be disposed to contact at least a portion of one surface (e.g., a surface facing the positive y-axis direction in the test tube insertion part 210) of the test tube insertion part 210.

In an embodiment, one surface of the second base region 222 may indicate a surface (e.g., a surface facing the positive the y-axis direction in the second base region 222) opposite to the surface where the second base region 222 contacts the test tube insertion part 210.

In an embodiment, the driving motor 224 may be disposed in the second base region 222. For example, the driving motor 224 may be disposed on one surface (e.g., a surface facing the positive the y-axis direction in the second base region 222) of the second base region 222.

In an embodiment, when the test tube insertion part 210 is placed in the first base region 221, the driving motor 224 may generate a rotational force and transmit it to the rotating member 213 of the test tube insertion part 210. The rotating member 213 may be rotated by the rotational force of the driving motor 224.

In an embodiment, the second base region 222 may have a cover coupling portion 2221 and/or a magnet holding portion 2222. The cover coupling portion 2221 and the magnet holding portion 2222 may be formed such that a portion of the second base region 222 extends to protrude in a direction away from one side of the second base region 222.

In an embodiment, the length at which the cover coupling portion 2221 protrudes from one surface of the second base region 222 may be greater than the length at which the magnet holding portion 2222 protrudes from one surface of the second base region 222.

In an embodiment, the cover 225 may be disposed in the second base region 222. For example, at least a portion of the cover 225 may be disposed and fixed to the cover coupling portion 2221 of the second base region 222.

In an embodiment, one surface of the cover 225 may indicate a surface of the cover 225 facing the second base region 222. For example, one surface of the cover 225 may be a surface facing the negative y-axis direction.

In an embodiment, the magnetic encoder 226 may be disposed on one surface of the cover 225. The magnetic encoder 226 may serve to detect the rotation of the magnet 227.

In an embodiment, the magnet 227 may be disposed in the magnet holding portion 2222 of the second base region 222. The magnet 227 has an N-pole and an S-pole.

In an embodiment, when the cover 225 is disposed in the second base region 222, the magnetic encoder 226 and the magnet 227 may be disposed to be spaced apart from each other. For example, since the protruding length of the cover coupling portion 2221 is greater than the protruding length of the magnet holding portion 2222 as described above, the magnetic encoder 226 and the magnet 227 may be arranged spaced apart in the longitudinal direction (e.g., y-axis direction) of the test tube supply device 200.

In an embodiment, when the test tube insertion part 210 and the first base region 221 are combined with each other, the rotating member 213 may be connected to the magnet holding portion 2222 of the second base region 222. During the rotation of the rotating member 213, the magnet holding portion 2222 and the magnet 227 disposed in the magnetic holding portion 2222 can be rotated together with the rotating member 213. While the magnet 227 rotates, the N-pole and the S-pole of the magnet 227 also rotate and change their positions.

In an embodiment, the magnetic encoder 226 can detect a rotational state of the magnet 227. For example, the magnetic encoder 226 can detect the rotational state of the magnet 227 through a change in the position of the N and S poles of the magnet 227 and/or a change in the magnetic field by the rotation of the magnet 227.

In an embodiment, the test tube T (see FIG. 5A) may be placed on the rotating member 213 of the test tube insertion part 210 and then discharged to the outside of the test tube supply device 200 by the rotation of the rotating member 213. For example, the test tube T (see FIG. 5C) may be discharged to the outside of the test tube supply device 200 through the discharge opening 2212.

In an embodiment, a normal operating state of the rotating member 213 may mean that the rotating member 213 rotates within a predetermined reference speed range and the rotation of the rotating member 213 is not interrupted. If the rotating member 213 is not in the normal operating state, the discharge of the test tube T (see FIG. 4) inserted into the test tube supply device 200 to the outside of the test tube supply device 200 may be delayed. For example, if a plurality of test tubes T (see FIG. 4) are placed around the rotating member 213 and interfere with the rotation of the rotating member 213, and thereby the rotation of the rotating member 213 is stopped or is below a predetermined reference speed, the rotating member 213 may not be in the normal operating state.

A jamming phenomenon of the test tube T (see FIG. 5A) in the test tube supply device 200 may mean a phenomenon that the test tube T (see FIG. 5A) is caught in at least a portion of the test tube supply device 200 in the process of being discharged to the outside of the test tube supply device 200, thereby causing a discharge delay. If the jamming phenomenon of the test tube T (see FIG. 5A) occurs in the test tube supply device 200, the rotating member 213 may not be in the normal operating state.

In an embodiment, the magnetic encoder 226 can detect whether the rotating member 213 is in the normal operating state. For example, if the rotation of the rotating member 213 is stopped during rotation in one direction, the rotation of the magnet 227 may also stop. In this case, the magnetic encoder 226 can detect that the rotating member 213 is not in the normal operating state by identifying the change in the magnetic field due to the stop of rotation of the magnet 227.

In an embodiment, when the magnetic encoder 226 detects that the rotating member 213 is not in the normal operating state, the test tube supply device 200 may rotate the rotating member 213 in a direction opposite to a previous rotation direction. Therefore, the rotating member 213 is rotated again in the opposite direction, so that delay in discharging the test tube T (see FIG. 4) from the test tube supply device 200 can be prevented.

In an embodiment, the test tube supply device 200 may determine whether the rotating member 213 is in the normal operating state by monitoring the current value of the driving motor 224, and adjust the rotation of the rotating member 213. For example, when the rotation of the rotating member 213 is interrupted due to external factors, the driving motor 224 requires additional rotational force, and the current value of the driving motor 224 rises above a predetermined reference value. In this case, the test tube supply device 200 determines that the rotating member 213 is not in the normal operating state, and rotates the rotating member 213 in a direction opposite to a previous rotation direction.

In an embodiment, the test tube supply device 200 may determine whether the rotating member 213 is in the normal operating state by monitoring the rotational speed of the rotating member 213, and adjust the rotation of the rotating member 213. For example, when the rotational speed of the rotating member 213 decreases below a predetermined reference speed, the test tube supply device 200 determines that the rotating member 213 is not in the normal operating state, and rotates the rotating member 213 in a direction opposite to a previous rotation direction.

In an embodiment, the coupling detection sensor 228 may be disposed in at least a portion of the second base region 222. The coupling detection sensor 228 may detect whether the test tube insertion part 210 is coupled to the base part 220. The test tube supply device 200 may cause the driving motor 224 to rotate only when the coupling detection sensor 228 detects the coupling of the base part 220 and the test tube insertion part 210.

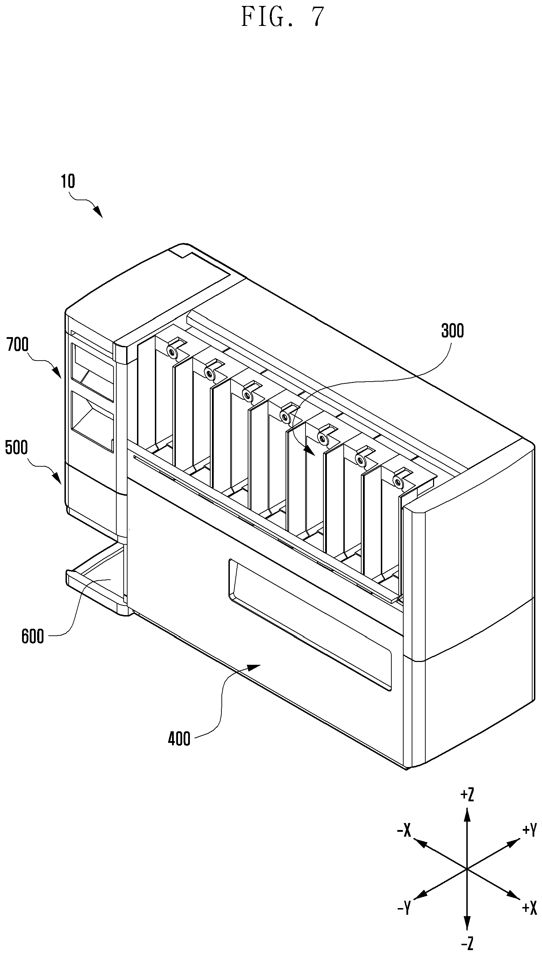

FIG. 7 is a perspective view showing a label attaching system 10 including a test tube supply device 300 according to an embodiment of the disclosure.

The label attaching system 10 according to an embodiment of the disclosure may include the test tube supply device 300, a label printing device 400, a labeling device 500, a tray mounting unit 600, and/or an auxiliary input/output device 700.

The test tube supply device 300 shown in FIG. 7 may refer to the test tube supply device 100 shown in FIG. 1A or the test tube supply device 200 shown in FIG. 6A, or include at least a portion of the test tube supply device 100 or 200 shown in FIG. 1A or FIG. 6A.

In an embodiment, the label printing device 400 may be provided under the test tube supply device 300 (e.g., in the negative z-axis direction from the test tube supply device 300), and it may serve to print patient information related to a sample contained in a test tube on a label to be attached to the test tube.

In an embodiment, the label printing device 400 may print patient information, such as patient ID, test items, test tube type, and blood collection amount, on a label supplied from a label supply roller (not shown) on which the label is wound.

In an embodiment, the labeling device 500 may be provided on one side of the label printing device 400 (e.g., in the negative x-axis direction from the label printing device 400), and it may serve to attach the label supplied from the label printing device 400 to the test tube supplied from the test tube supply device 300.

In an embodiment, the test tube discharged from the test tube supply device 300 may be placed in the labeling device 500 for labeling. The label printed in the label printing device 400 may be transferred to the labeling device 500 with a release paper attached to the back of the label removed. The labeling device 500 may serve to attach the label transferred from the label printing device 400 to the test tube supplied from the test tube supply device 300.

In an embodiment, the tray mounting unit 600 is a space in which a tray (not shown) for storing test tubes discharged through the labeling device 500 is mounted, and it may be formed under the labeling device 500 (e.g., in the negative z-axis direction from the labeling device 500).

In an embodiment, the auxiliary input/output device 700 may be disposed on one side of the test tube supply device 300 (e.g., in the negative x-axis direction from the test tube supply device 300), and it may output or scan patient information separately from the label attached to the test tube.

According to an embodiment of the disclosure, a test tube supply device 100 includes a first housing 110, a second housing 120, a rotating member 130, and a driving motor 160. The first housing 110 may have a first side 111 extending in a width direction (e.g., x-axis direction) of the test tube supply device 100, a second side 112 connected to the first side 111 and extending in a longitudinal direction (e.g., y-axis direction) of the test tube supply device 100, and a third side 113 connected to the second side 112 and formed parallel to the first side 111. The second housing 120 may have a first support side 121 connected to the second side 112 of the first housing 110. The rotating member 130 may include a rotating shaft 133 connected to the first and third sides 111 and 113 of the first housing 110, and a test tube placeable portion 131 on which a test tube T is placed. The rotating member 130 may be disposed in a space formed by the first, second, and third sides 111, 112, and 113 of the first housing 110, extend from the first side 111 to the third side 113, and capable of rotating around the rotating shaft 133. The driving motor 160 may be connected to the rotating member 130 to rotate the rotating member 130.

In an embodiment, when the test tube T is placed in the test tube placeable portion 131, the rotating member 130 may rotate in one direction to discharge the test tube T placed in the test tube placeable portion 131 to outside of the test tube supply device 100.

In an embodiment, when rotation of the rotating member 130 is stopped during rotation in one direction, the rotating member 130 may rotate in another direction opposite to the one direction.

In an embodiment, the test tube placeable portion 131 may be formed concavely at least in part toward a rotation center M of the rotating member 130.

In an embodiment, the test tube placeable portion 131 may include a first test tube placeable portion 131a and a second test tube placeable portion 131b formed at a position symmetrical to the first test tube placeable portion 131a with respect to the rotating shaft 133.

In an embodiment, the second housing 120 may further have a second support side 122 connected to the third side 113 of the first housing 110.

In an embodiment, the driving motor 160 may be disposed on the second support side 122.

In an embodiment, the test tube supply device 100 may further include a magnet 227 rotated together with the rotating member 130 and having an N pole and an S pole, and a magnetic encoder 226 located at a distance from the magnet 227.

In an embodiment, the magnetic encoder 226 may detect that rotation of the rotating member 130 is stopped, using a change in magnetic field by rotation of the magnet 227.

In an embodiment, the test tube supply device 100 may further include a test tube detection sensor 140 disposed on both sides of the rotating member 130 and detecting a positional movement of the test tube T.

In an embodiment, the rotating member 130 may further include a groove 132 in which a portion of the rotating member 130 is depressed in a direction perpendicular to an extension direction of the rotating member 130.

In an embodiment, the test tube detection sensor 140 may be disposed in the groove 132 at least in part.

In an embodiment, the test tube supply device 100 may further include a supporting part 150 disposed in a direction toward the rotating member 130 on the second side 112 of the first housing 110, and having a first surface 151 for supporting the test tube T, and a second surface 152 connected to the first surface 151, formed in a shape corresponding to a portion of the rotating member 130, and positioned at a distance from the rotating member 130.

In an embodiment, the rotating member 130 may include a curved area 134 having a shape symmetrical about the rotating shaft 133 and extending with a curved surface.

In an embodiment, the test tube supply device 100 may further include a gear 170 disposed on the third side 113 of the first housing 110.

In an embodiment, the gear 170 may transmit a rotational force generated by the driving motor 160 to the rotating member 130.

In an embodiment, the test tube supply device 200 may include a test tube insertion part 210 and a base part 220. The test tube insertion part 210 may include the first housing 211, the second housing 212, and the rotating member 213. The base part 220 may include the driving motor 224, a first base region 221 coupled to the first housing 211, and a second base region 222 extending in a direction perpendicular to the first base region 221 and where the driving motor 224 is disposed.

In an embodiment, the test tube insertion part 210 and the base part 220 may be detachably coupled to each other.

In an embodiment, the base part 220 may further include a coupling detection sensor 228 for detecting whether the test tube insertion part 210 is coupled to the base part 220.

According to an embodiment of the disclosure, a label attaching system 10 may include a test tube supply device 300 as described above, a label printing device 400, and a labeling device 500. The label printing device 400 may be disposed in one direction of the test tube supply device 300 and print information on a label to be attached to a test tube T. The labeling device 500 may be provided on one side of the label printing device 400 and attach the label supplied from the label printing device 400 to the test tube T supplied from the test tube supply device 300.

In an embodiment, the label attaching system 10 may further include a tray mounting unit 600 disposed in one direction of the labeling device 500 and having a space in which a tray for storing the test tubes T discharged through the labeling device 500 is mounted.

In an embodiment, the label attaching system 10 may further include an auxiliary input/output device 700 disposed on one side of the test tube supply device 300 and capable of outputting or scanning patient information separately from the label attached to the test tube T.

Although the disclosure has been described hereinbefore through embodiments, the scope of the disclosure is not necessarily limited to the above description. The described embodiments can be implemented with modifications and variations within the scope of the disclosure.

## Claims

1. A test tube supply device comprising:
a first housing having a first side extending in a width direction of the test tube supply device, a second side connected to the first side and extending in a longitudinal direction of the test tube supply device, and a third side connected to the second side and formed parallel to the first side;
a second housing having a first support side connected to the second side of the first housing;
a rotating member including a rotating shaft connected to the first and third sides of the first housing, and a test tube placeable portion on which a test tube is placed, the rotating member disposed in a space formed by the first, second, and third sides of the first housing, extending from the first side to the third side, and capable of rotating around the rotating shaft; and
a driving motor connected to the rotating member to rotate the rotating member,
wherein when the test tube is placed in the test tube placeable portion, the rotating member rotates in one direction to discharge the test tube placed in the test tube placeable portion to outside of the test tube supply device, and
wherein when rotation of the rotating member is stopped during rotation in one direction, the rotating member rotates in another direction opposite to the one direction.

2. The test tube supply device of claim 1, wherein the test tube placeable portion is formed concavely at least in part toward a rotation center of the rotating member.

3. The test tube supply device of claim 1, wherein the test tube placeable portion includes:
a first test tube placeable portion; and
a second test tube placeable portion formed at a position symmetrical to the first test tube placeable portion with respect to the rotating shaft.

4. The test tube supply device of claim 1, wherein the second housing further has a second support side connected to the third side of the first housing, and
the driving motor is disposed on the second support side.

5. The test tube supply device of claim 1, further comprising:
a magnet rotated together with the rotating member and having an N pole and an S pole; and
a magnetic encoder located at a distance from the magnet,
wherein the magnetic encoder detects that rotation of the rotating member is stopped, using a change in magnetic field by rotation of the magnet.

6. The test tube supply device of claim 1, further comprising:
a test tube detection sensor disposed on both sides of the rotating member and detecting a positional movement of the test tube.

7. The test tube supply device of claim 6, wherein the rotating member further includes a groove in which a portion of the rotating member is depressed in a direction perpendicular to an extension direction of the rotating member, and
the test tube detection sensor is disposed in the groove at least in part.

8. The test tube supply device of claim 1, further comprising:
a supporting part disposed in a direction toward the rotating member on the second side of the first housing, and having a first surface for supporting the test tube, and a second surface connected to the first surface, formed in a shape corresponding to a portion of the rotating member, and positioned at a distance from the rotating member.

9. The test tube supply device of claim 1, wherein the rotating member includes a curved area having a shape symmetrical about the rotating shaft and extending with a curved surface.

10. The test tube supply device of claim 1, further comprising:
a gear disposed on the third side of the first housing,
wherein the gear transmits a rotational force generated by the driving motor to the rotating member.

11. The test tube supply device of claim 1, comprising:
a test tube insertion part including the first housing, the second housing, and the rotating member; and
a base part including the driving motor, a first base region coupled to the first housing, and a second base region extending in a direction perpendicular to the first base region and where the driving motor is disposed,
wherein the test tube insertion part and the base part are detachably coupled to each other.

12. The test tube supply device of claim 11, wherein the base part further includes a coupling detection sensor for detecting whether the test tube insertion part is coupled to the base part.

13. A label attaching system comprising:
a test tube supply device;
a label printing device disposed in one direction of the test tube supply device and printing information on a label to be attached to a test tube; and
a labeling device provided on one side of the label printing device and attaching the label supplied from the label printing device to the test tube supplied from the test tube supply device,
the test tube supply device comprising:
a first housing having a first side extending in a width direction of the test tube supply device, a second side connected to the first side and extending in a longitudinal direction of the test tube supply device, and a third side connected to the second side and formed parallel to the first side;
a second housing having a first support side connected to the second side of the first housing;
a rotating member including a rotating shaft connected to the first and third sides of the first housing, and a test tube placeable portion on which a test tube is placed, the rotating member disposed in a space formed by the first, second, and third sides of the first housing, extending from the first side to the third side, and capable of rotating around the rotating shaft; and
a driving motor connected to the rotating member to rotate the rotating member,
wherein when the test tube is placed in the test tube placeable portion, the rotating member rotates in one direction to discharge the test tube placed in the test tube placeable portion to outside of the test tube supply device, and
wherein when rotation of the rotating member is stopped during rotation in one direction, the rotating member rotates in another direction opposite to the one direction.

14. The label attaching system of claim 13, further comprising:
a tray mounting unit disposed in one direction of the labeling device and having a space in which a tray for storing the test tubes discharged through the labeling device is mounted.

15. The label attaching system of claim 13, further comprising:
an auxiliary input/output device disposed on one side of the test tube supply device and capable of outputting or scanning patient information separately from the label attached to the test tube.
